# EUROPEAN PATENT SPECIFICATION

(11) **EP 0 322 371 B1**
(45) Date of publication and mention of the grant of the patent: **12.05.1993**
(21) Application number: 88830508.3
(22) Date of filing: 29.11.1988
(51) Int. Cl.: B60T 8/18

(54) **A pneumatic regulator for regulating braking force in dependence on load, particularly for a vehicle provided with self-levelling suspension**
Lastabhängiger Bremskraftregler, insbesondere für Fahrzeuge mit Niveauregulierung
Régulateur pneumatique pour régulation de la force de freinage en fonction de la charge en particulier pour véhicule avec suspension auto-adaptive

(30) Priority: 23.12.1987 IT 6811987
(43) Date of publication of application: 28.06.1989
(73) Proprietor: BENDIX HEAVY VEHICLE SYSTEMS ITALIA S.P.A., 20128 Milano (IT)
(72) Inventor: Angelillo, Domenico, I-20099 Sesto S. Giovanni Milano (IT); Gorini, Vittorio, I-20048 Carate Brianza Milano (IT)
(74) Representative: Quinterno, Giuseppe

(56) References cited:
- EP-A- 0 058 413
- CH-A- 594 520
- DE-B- 1 273 346
- FR-A- 2 276 967
- GB-A- 878 568
- US-A- 3 814 483

## Description

The present invention relates to a pneumatic regulator for regulating braking force in dependence on load, particularly for a vehicle provided with self-levelling suspension, of the kind defined in the introduction of claim 1.

DE-B-12 73 346 discloses a regulator of this kind for a vehicle whose suspensions include a main leaf spring and a supplementary leaf spring. In this known regulator the position of the movable fulcrum is controlled by means of a piston and first and second helical reaction springs, whose characteristics are determined as a function of said main and auxiliary leaf springs, respectively. A single hand-operable control member permits to vary the intervention point of the second reaction spring, but the arrangement is such that it is not possible to change said intervention point without affecting the characteristics of both the reaction springs.

According to the invention an improved pneumatic regulator of the above specified kind is provided, the main features of which are defined in claim 1.

A specific embodiment of the regulating device includes a ring nut mounted for rotation in an aperture in the body, and into which is screwed a tubular adjustment member with external and internal threading; the portion of the tubular member which is inside the body having a head with a helical seat in which an intermediate portion of the second spring extends; a threaded rod being screwed into the tubular member for varying the preloading of the first spring.

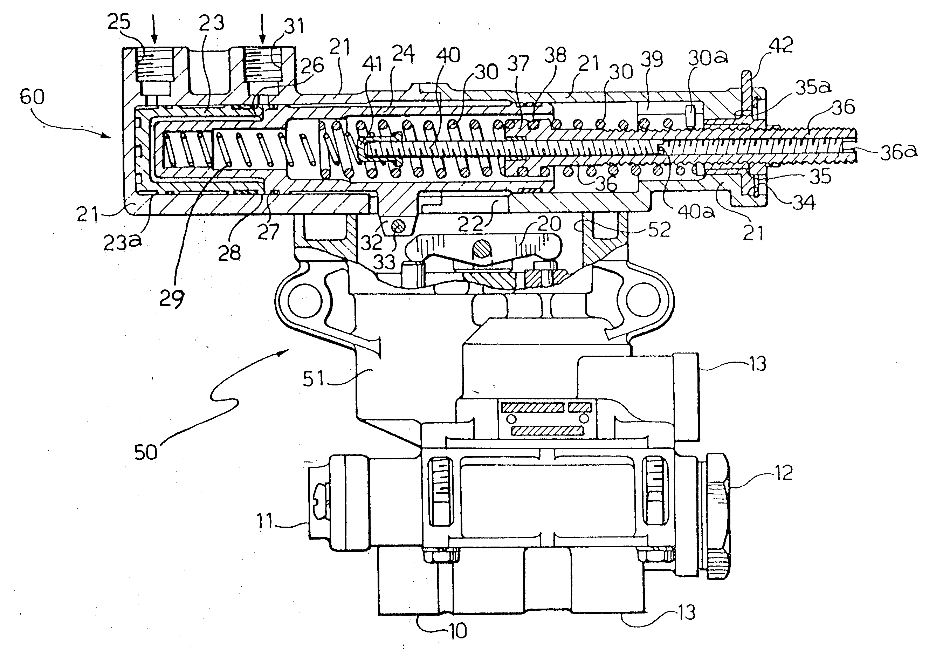

Further characteristics and advantages of the braking force regulator will become clear from the detailed description which follows with reference to the appended drawing, provided purely by way of non-limiting example, which shows one embodiment of the regulator in partial section.

In the drawing, a pneumatic device according to the invention for regulating braking force in dependence on load is generally indicated 50. This device includes a first body 51 with an inlet connector 10 which is intended to receive a brake-operating pressure through the regulable brake-operating pipe (not illustrated) of the braking system of the vehicle. The body 51 also has an inlet connector 11 for connection to the supply pipe of the vehicle braking system, an inlet-outlet connector 12 which is connected in a manner not illustrated to a pressure accumulator, and two outlet connectors 13 for connection to the vehicle brake members.

Valve devices are provided in the body 51 for controlling communication between the inlet/outlet connector 12 and the outlet connector 13 in dependence on the brake-operating pressure supplied to the inlet connector 10 and, as will be seen, in dependence on the load bearing on the vehicle. These valves are described in detail, for example, in the European patent application referred to above. For the purposes of the description of the present invention, it suffices to stress the fact that these devices include a rocker arm 20 with a variable fulcrum, mounted in the body 51 near one of its end openings, indicated 52.

The ratio between the brake-operating pressure and the braking pressure actually applied to the brake members varies, in known manner, with variations of the position of the fulcrum of the rocker arm 20.

The regulator according to the invention further includes a device, generally indicated 60, for moving the fulcrum of the rocker arm 20. This device includes a substantially-cylindrical, hollow body 21 with a central longitudinal slit 22. This body is fixed to the body 51 in the manner illustrated with the slit 22 facing the rocker arm 20.

Two hollow pistons 23 and 24 are sealingly slidable in series with each other in the body 21. The piston 23 is essentially cup-shaped and has an annular shoulder 23a which can be acted on by an operating pressure dependent on the load supplied through a connector 25 of the body 21.

The piston 24 has an end portion which can be inserted in the piston 23 and a shoulder 26 which can move into abutment with the other piston 23. The outer edge of the shoulder 26 has a circumferential chamfer 27 and the end of the piston 23 which faces the piston 24 similarly has an outer circumferential chamfer 28.

When the regulator is in the condition illustrated in the drawing (the rest condition in which it is separate from the system in which it is to be used) the pistons 23 and 24 are kept in the position illustrated by the action of a spring 29. In this condition, the chamfers 27 and 28 described above face an inlet connector 31 of the body 21 which is intended, in operation, to receive an operating pressure which depends on the load.

If the vehicle has a self-levelling rear suspension with air springs, each of the connectors 25 and 31 is connected to a respective one of the air springs.

The piston 24 has on one side a pair of facing radial appendages 32 (only one of which is visible in the drawing) which extend into the body 51 through the slit 22 in the body 21. A pin 33 extends between these appendages, perpendicular to the axis of the piston, and can cooperate with the rocker arm 20, acting in particular as its movable fulcrum.

At the opposite end from the connectors 25 and 31, the body 21 has an aperture 34 in which a ring nut 35 is rotatable.

A tubular adjustment member 36 which is threaded externally and internally is screwed into the ring nut 35. Within the body 21, this member has a head 37 with a helical seat 38 engaged by an intermediate portion of a spring 30. This spring is translatable within the body 21 but is locked against rotation relative to the body by the engagement of one of its ends 30a in a retaining and guide groove 39 formed in the body.

The ring nut 35 is conveniently provided with added threading of the self-braking type such that, when it is rotated, it rotates the member 36 unless the latter is restrained, in which case, the ring nut drives the translational movement of the spring 30 as will be seen. The member 36 conveniently also has added self-braking anti-unscrewing threading.

A threaded rod, indicated 40, is screwed into the tubular adjustment member 36. One end of the rod 40 projects from the head 37 and carries a substantially cup-shaped reaction member 41 against which one end of the spring 29 reacts in the manner illustrated.

The preloading of the spring 29 can be varied by rotation of the threaded rod 40.

The axial position of the spring 30 relative to the body 21 can be adjusted by rotation of the ring nut 35. This ring conveniently has a plurality of radial peripheral notches (of which one, indicated 35a, is visible in the drawing) for engaging a locking pin 42 for retaining the ring in the angular position required at any time. Alternatively a grub screw could be used for locking the ring.

The rotation of the tubular adjustment member 36 (the ring nut 35 remaining stationary) moves the head 37 within the spring 30, thus varying the number of turns of the spring between the head and the piston 24. This portion of the spring 30 is the active part of the spring and the movement of the head 37 in effect varies the elastic constant of this active part of the spring.

If the pitches of the spring 30, of the helical groove in the head 27, of the external threading of the tubular member 36 and of the internal threading of the ring nut 35 are identical to each other, then the rotation of the tubular member 36 causes only the movement of the head 37 within the spring 30, without altering the axial position of the latter relative to the body 21.

If, however, the pitches of the spring and of the threading of the ring nut 35 are different from each other, as well as causing the movement of the head 37 in the spring 30, the rotation of the tubular member 36 also causes a movement of the spring 30 within the body.

It is possible to compensate for this movement, which is concomitant with the variation of the elastic constant of the active part of the spring, by means of the ring nut 35, which, as stated above, affects only the axial position of the spring 30.

The threaded adjustment members 36 and 40 conveniently have respective end notches 36a and 40a in the form of screwdriver slots, for facilitating their rotation.

The fact that the loading of the spring 29, the axial position of the spring 30 and the elastic constant of its active portion can be adjusted independently enables the device to be calibrated very easily for variations in the characteristics of the vehicle in which it is to be used.

Generally speaking, when the device is installed in a vehicle braking system, pressure is supplied to the connectors 25 and 31 such that the piston 24 assumes a position relative to the body 21 in which the pin 33 is facing the rocker arm 20. The calibration of the braking regulator is then carried out in the following manner.

The position of the fulcrum 33 relative to the rocker arm 20 is adjusted for the unloaded condition of the vehicle by means solely of the threaded rod 40, the preloading of the spring 29 thus being varied appropriately. In particular, if the spring is slackened, there is an increase in the braking pressure supplied to the brake members through the connector 13 of the regulator for a given brake-operating pressure supplied to the connector 10.

The calibration of the regulator when the vehicle is fully loaded, however, is achieved by means of the ring nut 35 and the adjustment member 36. In particular, the ring nut 35 enables the spring 30 to be moved axially relative to the body 21 so that the spring starts to be compressed only when the piston 24 is in its position corresponding to the unloaded condition of the vehicle. It is then possible to modify the elastic constant of the active portion of the spring 30 by means of the adjustment member 36 in such a manner that, in the fully loaded condition, the fulcrum 33 is situated in the position relative to the rocker arm 20 at which the desired braking pressure is obtained at the connector 13 of the regulator for a given brake-operating pressure.

## Claims

1. A pneumatic regulator for regulating braking force in dependence on load, particularly for a vehicle with a self-levelling suspension, the regulator having an inlet connector (10) for receiving a brake-operating pressure and at least one output connector (13) for providing a braking pressure to brake members of the vehicle, and comprising means for controlling the braking pressure, including a rocker arm (20) with a variable fulcrum which is arranged to determine the ratio between the brake-operating pressure and the braking pressure in dependence on the position of the fulcrum, and a control device (60;21-42) for moving the fulcrum (33) of the rocker arm (20) on variation of the load; the control device including
a body (60) in which at least one piston (24), which carries a member (33) capable of cooperating with the rocker arm (20) to act as its fulcrum, is sealingly slidable; the piston (24) being movable by an operating pressure which depends on the load, against the action of first and second reaction springs (29,30) of which the first (29) is inside the second (30) and the second (30) is locked against rotation; and
manually-operable adjustment means (35-42) associated with the body (21) for enabling a parameter of the first spring (29) and the elastic constant of the second spring (30) to be adjusted;
characterized in that said second reaction spring (30) is mounted axially movable with respect to the body (60), and in that said manually-operable adjustment means (35-42) include
a first hand-operable control member (35) capable of causing an axial displacement of said second reaction spring (30), and
second and third control members (36,40) which are hand-operable one independently of the other, for adjusting the elastic constant of the second reaction spring (30) and the loading of the first reaction spring (29), respectively.

2. A braking force regulator according to claim 1, characterized in that said first control member is a ring nut (35) rotatable in an aperture (34) in the body (21), and in that said second control member is a tubular member (36), externally and internally threaded, screwed into said ring nut (35) and having a head portion (37) with a helical seat (38) in which an intermediate portion of the second spring (30) extends; the third control member (40) being a threaded rod (40) screwed into said tubular member (36).

3. A braking force regulator according to claim 2, characterized in that the ring nut (35) is provided with stop means (42) for locking it in a required position relative to the body (21).

4. A braking force regulator according to any one of the preceding claims, characterized in that the piston (24) is hollow and has an internal central reaction surface against which the first spring (29) reacts, and a shoulder which is radially outside and axially offset with respect to the central surface and against which the second spring (30) can react.

## Patentansprüche

1. Pneumatischer Regler zum Regeln der Bremskraft in Abhängigkeit von der Last, insbesondere für ein Fahrzeug mit einer Aufhängung mit Niveauregulierung, wobei der Regler einen Einlaßverbinder (10) zur Aufnahme eines Bremsbetriebsdruckes sowie mindestens einen Ausgangsverbinder (13) zum Bereitstellen eines Bremsdruckes an die Bremselemente des Fahrzeuges aufweist, und eine Vorrichtung zum Steuern des Bremsdruckes umfaßt, einschließlich eines Kipphebels (20) mit einer veränderbaren Hebelstütze, welche so angeordnet ist, daß sie das Verhältnis zwischen dem Bremsbetriebsdruck und dem Bremsdruck in Abhängigkeit von der Position der Hebelstütze bestimmt, und einer Steuervorrichtung (60; 21-42) zum Bewegen der Hebelstütze (33) des Kipphebels (20) bei Veränderung der Last; wobei die Steuervorrichtung aus folgendem besteht
einem Körper (60), in dem mindestens ein Kolben (24), der ein Teil (33) trägt, das in der Lage ist, mit dem Kipphebel (20) zusammenzuwirken, um als seine Hebelstütze zu dienen, abdichtend verschiebbar ist; wobei der Kolben (24) durch einen Betriebsdruck gegen die Wirkung erster und zweiter Reaktionsfedern (29, 30), von denen die erste (29) sich in der zweiten (30) befindet und die zweite (30) gegen Drehung verriegelt ist, bewegbar ist, der von der Last abhängt; und
manuell betriebene Einstellvorrichtungen (35-42), die mit dem Körper (21) verbunden sind, um das Einstellen eines Parameters der ersten Feder (29) und der Elastizitätskonstante der zweiten Feder (30) zu ermöglichen;
dadurch gekennzeichnet, daß die zweite Reaktionsfeder (30) bezüglich des Körpers (60) axial beweglich angeordnet ist und daß die manuell betriebenen Einstellvorrichtungen (35-42)
ein erstes handbetriebenes Steuerglied (35) aufweisen, das in der Lage ist, eine axiale Verschiebung der zweiten Reaktionsfeder (30) zu bewirken, und
zweite und dritte Steuerglieder (36, 40), welche jeweils voneinander unabhängig manuell betrieben werden können, um jeweils die Elastizitätskonstante der zweiten Reaktionsfeder (30) und das Laden der ersten Reaktionsfeder (29) einzustellen.

2. Bremskraftregler gemäß Anspruch 1, dadurch gekennzeichnet, daß das erste Steuerglied eine Ringmutter (35) ist, die in einer Öffnung (34) in dem Körper (21) drehbar ist, und daß das zweite Steuerglied ein mit einem Außen- und einem Innengewinde versehenes rohrförmiges Glied (36) ist, welches in die Ringmutter (35) eingeschraubt ist und einen Kopfteil (37) mit einem schraubenförmigen Sitz (38) hat, in den ein Zwischenteil der zweiten Feder (30) verläuft; wobei das dritte Steuerglied (40) eine mit Gewinde versehene Stange (40) ist, die in das rohrförmige Glied (36) eingeschraubt ist.

3. Bremskraftregler gemäß Anspruch 2, dadurch gekennzeichnet, daß die Ringmutter (35) mit einer Stopvorrichtung (42) versehen ist, um sie in einer erforderlichen Position relativ zu dem Körper (21) zu verriegeln.

4. Bremskraftregler gemäß einem der vorhergehenden Ansprüche, dadurch gekennzeichnet, daß der Kolben (24) hohl ist und eine interne mittlere Reaktionsfläche hat, gegen die eine erste Feder (29) wirkt, und eine Schulter, welche sich radial außerhalb und axial versetzt zu der mittleren Oberfläche befindet und gegen die die zweite Feder (30) reagieren kann.

## Revendications

1. Régulateur pneumatique pour réguler une force de freinage en fonction de la charge, en particulier pour un véhicule équipé d'une suspension à correction d'assiette automatique, le régulateur présentant un raccord d'admission (10) pour recevoir une pression d'actionnement du frein, et au moins un raccord de sortie (13) pour fournir une pression de freinage à des organes de freinage du véhicule, et comprenant des moyens pour commander la pression de freinage, comportant un bras basculant (20) à point d'appui variable, qui est agencé pour déterminer le rapport entre la pression d'actionnement du frein et la pression de freinage en fonction de la position du point d'appui, et un dispositif de commande (60 ; 21-42) pour déplacer le point d'appui (33) du bras basculant (20) lors d'une variation de la charge ; le dispositif de commande comprenant
un carter (60) dans lequel peut coulisser, de manière étanche, au moins un piston (24) qui porte une pièce (33) pouvant coopérer avec le bras basculant (20) pour agir comme son point d'appui ; le piston (24) pouvant être déplacé par une pression d'actionnement dépendant de la charge, en s'opposant à l'action de premier et second ressorts de réaction (29, 30) parmi lesquels le premier (29) se trouve à l'intérieur du second (30), et le second (30) est verrouillé en rotation ; et
des moyens de réglage (35-42) actionnables manuellement, associés au carter (21) pour permettre le réglage d'un paramètre du premier ressort (29) et de la constante élastique du second ressort (30) ;
caractérisé par le fait que ledit second ressort de réaction (30) est monté avec mobilité axiale par rapport au carter (60) ; et par le fait que lesdits moyens de réglage (35-42) actionnables manuellement comprennent
un premier organe de commande (35) actionnable manuellement, apte à provoquer un déplacement axial dudit second ressort de réaction (30), et
des deuxième et troisième organes de commande (36, 40) qui sont actionnables manuellement, indépendamment l'un de l'autre, pour régler respectivement la constante élastique du second ressort de réaction (30) et la charge du premier ressort de réaction (29).

2. Régulateur de force de freinage selon la revendication 1, caractérisé par le fait que ledit premier organe de commande est un écrou annulaire (35) pouvant tourner dans un évidement (34) pratiqué dans le carter (21) ; et par le fait que ledit deuxième organe de commande est une pièce tubulaire (36) filetée extérieurement et intérieurement, vissée dans ledit écrou annulaire (35) et présentant une région frontale (37) munie d'un siège hélicoïdal (38) dans lequel s'étend une région intermédiaire du second ressort (30) ; le troisième organe de commande (40) étant une tige filetée (40) vissée dans ladite pièce tubulaire (36).

3. Régulateur de force de freinage selon la revendication 2, caractérisé par le fait que l'écrou annulaire (35) est pourvu d'un moyen d'arrêt (42) pour le verrouiller dans une position souhaitée par rapport au carter (21).

4. Régulateur de force de freinage selon l'une quelconque des revendications précédentes, caractérisé par le fait que le piston (24) est creux et présente une surface centrale intérieure de réaction contre laquelle le premier ressort (29) réagit, et un épaulement qui occupe une position radialement extérieure et décalée axialement par rapport à la surface centrale, et contre lequel le second ressort (30) peut réagir.
